# EUROPÄISCHE PATENTSCHRIFT

(11) **EP 1 684 931 B1**
(45) Veröffentlichungstag und Bekanntmachung des Hinweises auf die Patenterteilung: **01.08.2007**
(21) Anmeldenummer: 04818784.3
(22) Anmeldetag: 16.11.2004
(51) Int. Cl.: B23C 5/00, B23C 5/06

(54) **WERKZEUG ZUR ROTIERENDEN SPANABHEBENDEN BEARBEITUNG VON WERKSTOFFEN**
TOOL FOR MACHINING MATERIALS IN A ROTATING, CUTTING MANNER
OUTIL DESTINE A UN USINAGE ROTATIF PAR ENLEVEMENT DE COPEAUX DE MATERIAUX

(30) Priorität: 17.11.2003 DE 10354530
(43) Veröffentlichungstag der Anmeldung: 02.08.2006
(73) Patentinhaber: Nubius Group Präzisionswerkzeuge GmbH, 73037 Göppingen (DE)
(72) Erfinder: FREY, Oskar, 73107 Eschenbach (DE)
(74) Vertreter: Bulling, Alexander
(86) Internationale Anmeldenummer: PCT/EP2004/012986
(87) Internationale Veröffentlichungsnummer: WO 2005/049256

(56) Entgegenhaltungen:
- EP-A- 1 129 806
- WO-A-20/04087358
- US-B1- 6 508 612

## Beschreibung

Die Erfindung betrifft ein Werkzeug zur rotierenden spanabhebenden Bearbeitung von Werkstoffen, mit einer senkrecht zur Rotationsachse angeordneten Stirnseite, an und/oder in deren Umfang mindestens ein Schneidelement angeordnet ist, wobei das Schneidelement benachbart zu oder in einer Spankammer angeordnet ist. Ein Werkzeug gemäß dem Oberbegriff von Anspruch 1 ist z.B aus der EP 1129806 bekannt. Die WO 2004/087358 ist Stand der Technik gemäss Art. 54(3) EPÜ.

Derartige Werkzeuge sind aus dem Stand der Technik bekannt und sind im Laufe der Zeit mit Hinblick auf eine Vielzahl von Kriterien optimiert worden. Viele Verbesserungsvorschläge setzen sich damit auseinander, dass ein Werkzeug besonders stabil und vibrationsarm sein soll, um entsprechend höchsten Toleranzanforderungen fertigen zu können. Andere Verbesserungsvorschläge setzen sich mit einer guten Herstellbarkeit von Werkzeugen auseinander.

Auch die Herstellung möglichst leichter Werkzeuge ist ein Gesichtspunkt, insbesondere bei sehr großen Fräswerkzeugen. Je leichter ein Fräswerkzeug ist, desto höher kann seine Rotationsgeschwindigkeit gewählt werden. Es ist bekannt, für leichte Fräswerkzeuge besondere Werkstoffe wie beispielsweise Aluminiumlegierungen zu verwenden.

Aus der DE 692 03 466 T2 (=EP 0 496 392 B1) ist ein rotierendes Schneidwerkzeug bekannt geworden, das im Werkzeugkörper Durchgangsöffnungen insbesondere zur Gewichtsreduzierung und zur Schneidwärmeabführung aufweist.

Ein Gesichtspunkt, der bei der Entwicklung von Werkzeugen bisher keine oder eine sehr untergeordnete Rolle gespielt hat, ist die möglichst einfache Handhabung der Werkzeuge. Insbesondere im Sondermaschinenbau und bei der Wartung und/oder Reparatur der Werkzeuge sind manuelle Handhabungsvorgänge durch eine Bedienperson erforderlich. Bisher bekannte Werkzeuge berücksichtigen dies nicht, vielmehr sind die bekannten Werkzeuge äußerst unergonomisch ausgebildet, so dass eine manuelle Handhabbarkeit erschwert ist.

Hiervon ausgehend liegt der vorliegenden Erfindung die Aufgabe zugrunde, ein eingangs genanntes Werkzeug derart weiterzubilden, dass es möglichst leicht baut und gut handhabbar ist.

Diese Aufgabe wird erfindungsgemäß mit einem Werkzeug mit den Merkmalen des Anspruchs 1 gelöst.

Durch die Materialausnehmung kann Material eingespart werden, so dass das Trägheitsmoment des Werkzeugs reduziert werden kann, so dass dieses mit höheren Rotationsgeschwindigkeiten betrieben werden kann. Die Materialausnehmung ist dabei blütenblattartig ausgebildet und durch eine mehrfach gekrümmte Ebene gebildet. Eine solche mehrfach gekrümmte Ebene kann eine Gestalt haben, die, mit Bezug auf Spankammern, in der deutschen Patentanmeldung 103 38 276 beschrieben ist. Durch die mehrfache Krümmung der Ebene können die Materialausnehmungen rund ausgeformt werden. Dies hat den Vorteil, dass sich die Fingerkuppen der Hand einer Bedienperson in die Materialausnehmungen einfügen können, wodurch ein sicheres und ergonomisch besonders günstiges Ergreifen des Werkzeugs möglich ist.
Die erfindungsgemäße Materialausnehmung hat außerdem den Vorteil, dass sie eine Fläche bildet, die von einer Bedienperson besonders gut gegriffen werden kann. Dies erleichtert die Handhabbarkeit des Werkzeugs, so dass eine Bedienperson das erfindungsgemäße Werkzeug leichter und mit weniger Kraftaufwand handhaben kann, beispielsweise um das Werkzeug zu einer Werkzeugmaschine zu tragen. Die Handhabung wird natürlich auch durch das geringere Gewicht verbessert. Durch die gute Handhabbarkeit des Werkzeugs wird gleichzeitig das Risiko verringert, dass sich eine Bedienperson an scharfen Kanten des Werkzeugs, die beispielsweise durch die Schneidelemente gebildet sind, verletzt.

Die Materialausnehmung kann zwischen einer Spankammer und einem zentrischen Bereich des Werkzeugs angeordnet sein, wobei der zentrische Bereich des Werkzeugs durch eine Werkzeugaufnahme gebildet sein kann. Die Werkzeugaufnahme kann beispielsweise eine um die Rotationsachse angeordnete zylindrische Senkung und/oder Öffnung aufweisen.

Vorteilhafterweise sind die Materialausnehmungen punktsymmetrisch zur Rotationsachse des Werkzeugs angeordnet. Dies bedeutet, dass die Materialausnehmungen an der Stirnseite des Werkzeugs entlang eines zur Rotationsachse des Werkzeugs konzentrischen Kreises angeordnet sein können, so dass bei Rotation des Werkzeugs keine Unwuchten entstehen. Dabei entspricht vorteilhafterweise die Anzahl der Materialausnehmungen der Anzahl der Spankammern. Somit kann besonders viel Material eingespart werden, wobei gleichzeitig eine Punktsymmetrie des Werkzeugs gewährleistet ist, so dass das Werkzeug mit hohen Rotationsgeschwindigkeiten betreibbar ist.

Die Materialausnehmungen können benachbart zu den Spankammern angeordnet sein oder direkt an die Spankammern angrenzen. Je größer die Materialausnehmungen sind, desto mehr Material kann eingespart werden, wobei jedoch die minimal erforderliche Stabilität des Werkzeugs zu berücksichtigen ist.

An der Stirnseite des Werkzeugs kann zwischen einer Materialausnehmung und einer Spankammer eine Engstelle vorgesehen sein. Diese Engstelle ermöglicht es, einen Abtransport von während des Bearbeitungsvorgangs erzeugten Spänen zu unterstützen.

Die Materialausnehmung kann symmetrisch zu einer in radialer Richtung des Werkzeugs verlaufenden Achse ausgebildet sein. Dies erleichtert die Herstellung der Materialausnehmung, die beispielsweise spanend hergestellt sein kann.

Die Oberfläche einer Materialausnehmung kann sich bezogen auf das Werkzeug in radialer und axialer Richtung erstrecken. Hierdurch ist die Materialausnehmung gegenüber der sich senkrecht zur Rotationsachse des Werkzeugs erstreckenden Stirnseite geneigt, wodurch die Handhabbarkeit weiter verbessert werden kann.

Die Materialausnehmung kann einen Querschnitt begrenzen, der sich nach radial außen verjüngt. Hierdurch ist gewährleistet, dass in einem radial innenliegenden Bereich möglichst viel Material eingespart werden kann, während in einem radial außenliegenden Bereich mehr Material stehen bleibt, wodurch die Festigkeit des Werkzeugs in zu den Spankammern benachbarten Bereichen erhöht ist.

Die Spankammer kann einen Querschnitt begrenzen, der sich nach radial außen erweitert. Durch diese Maßnahme ist ein besonders zuverlässiger Spanabfluss ermöglicht.

In Ausgestaltung der Erfindung ist zum Transport von Bearbeitungsmedium mindestens ein zumindest teilweise radial verlaufender, in Umfangsrichtung geschlossener Kanal vorgesehen. Das Bearbeitungsmedium kann Druckluft und/oder Mittel umfassen, die kühlend und/oder schmierend und/oder spülend wirken. Das Bearbeitungsmedium kann über einen zentrischen Bereich des Werkzeugs, insbesondere über die Werkzeugaufnahme, dem Kanal zugeführt werden. Hierfür ist es vorteilhaft, dass der Eingang des Kanals in einem werkzeugmittigen Bereich, insbesondere im Bereich der Werkzeugaufnahme, vorgesehen ist. Der Eingang des Kanals kann aber auch innerhalb einer Materialausnehmung vorgesehen sein. Der Ausgang des Kanals kann in einer Spankammer münden.

Nach einer weiteren vorteilhaften Ausführungsform der Erfindung ist vorgesehen, dass an der Stirnseite zwischen Materialausnehmung und Spankammer eine Engstelle vorgesehen ist, wobei ein Bearbeitungsmedium von der Materialausnehmung über die Engstelle der Spankammer zuführbar ist. Somit kann die Materialausnehmung als Leitfläche für ein Bearbeitungsmedium verwendet werden. Somit kann dem Schneidelement optional oder gleichzeitig durch in Umfangsrichtung geschlossene Kanäle oder entlang der Stirnseite des Werkzeugs ein Bearbeitungsmedium zugeführt werden.

Die Engstelle kann durch Verschneidung einer Materialausnehmung mit einer Spankammer gebildet sein. Dies hat den Vorteil, dass sich die Geometrie der Engstelle durch Bearbeitung der Materialausnehmung und der Spankammer ergibt, ohne dass weitere Fertigungsschritte erforderlich sind.

Für eine gute Strömung des Bearbeitungsmediums ist es vorteilhaft, wenn die Engstelle rinnenförmig ausgebildet ist.

Die Engstelle kann von Dichtstellen begrenzt sein. Somit ist gewährleistet, dass das Bearbeitungsmedium mit hohen Strömungsgeschwindigkeiten durch die Engstelle der Führung fließen kann. Die Dichtstellen können zumindest teilweise durch Berandungen der Materialausnehmungen und der Spankammern begrenzt sein. Dabei kann eine Dichtstelle zwischen einer ersten Spankammer und einer radial hierzu innenliegenden ersten Materialausnehmung und einer zweiten Spankammer und einer radial hierzu innenliegenden zweiten Materialausnehmung angeordnet sein. Somit kann die Kontur der Dichtstellen durch die Herstellung der Spankammern und der Materialausnehmungen definiert werden, ohne dass weitere Herstellungsvorgänge erforderlich sind.

Die Dichtstellen können bei Eingriff des Schneidelements in den zu bearbeitenden Werkstoff einen kleinen Abstand zur Werkstückoberfläche haben. Dieser Abstand kann 0,01 bis 1,5 mm, insbesondere 0,2 bis 0,5 mm, betragen. Der Abstand ist unter anderem davon abhängig, welche Viskosität das Bearbeitungsmedium aufweist. Dieses bildet einen Dichtfilm, der sich zwischen Dichtstelle und Werkstückoberfläche erstreckt, so dass das Bearbeitungsmedium oder zumindest ein größter Teil des Bearbeitungsmediums der Engstelle der Führung zugeführt werden kann, wo es hohe Strömungsgeschwindigkeiten aufbaut, um der Spankammer und dem Schneidelement definiert zugeführt werden zu können.

Weitere vorteilhafte Ausgestaltungen und Einzelheiten der Erfindung sind der folgenden Beschreibung zu entnehmen, in der die Erfindung anhand der in der Zeichnung dargestellten Ausführungsbeispiele näher beschrieben und erläutert ist.

Es zeigen:
- Figur 1: eine perspektivische Ansicht einer ersten Ausführungsform eines erfindungsgemäßen Werkzeugs mit vier Schneidelementen;
- Figur 2: eine Draufsicht des Werkzeugs gemäß Figur 1;
- Figur 3: eine perspektivische Ansicht einer zweiten Ausführungsform eines erfindungsgemäßen Werkzeugs mit elf Schneidelementen;
- Figur 4: eine Seitenansicht des Werkzeugs gemäß Figur 3; und
- Figur 5: eine perspektivische Ansicht einer dritten Ausführungsform eines erfindungsgemäßen Werkzeugs mit fünf Schneidelementen pro Spankammer.

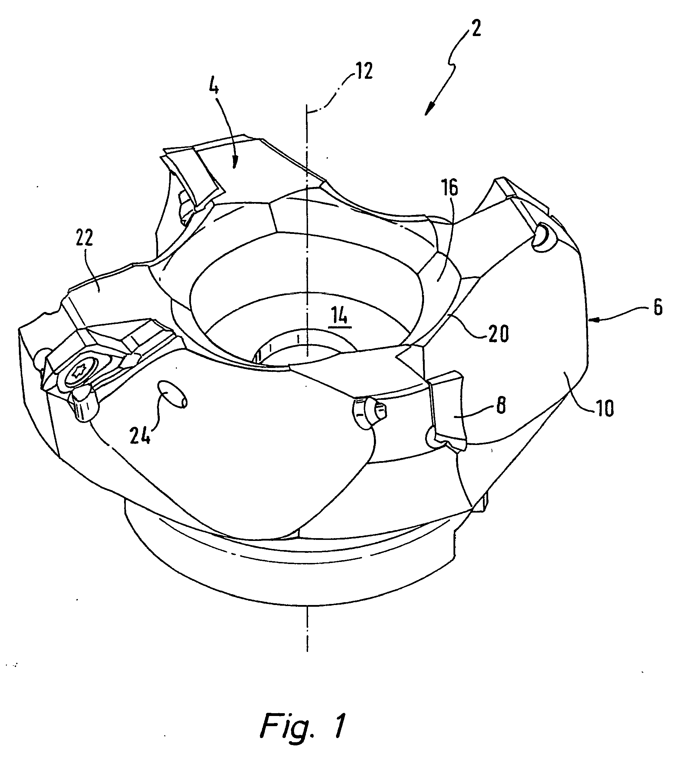

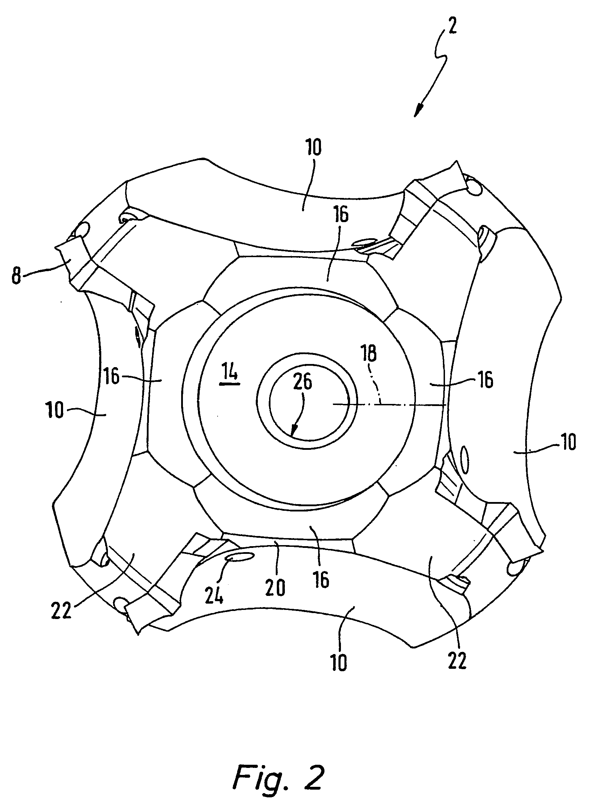

In den Figuren 1 und 2 ist ein Werkzeug zur rotierenden spanabhebenden Bearbeitung von Werkstoffen allgemein mit dem Bezugszeichen 2 bezeichnet. Das Werkzeug 2 weist eine Stirnseite 4 auf, an deren Umfang 6 vier Schneidelemente 8 angeordnet sind, die entlang des Umfangs 6 einen gleichen Winkelabstand zueinander haben. Benachbart zu den Schneidelementen 8 sind Spankammern 10 vorgesehen, deren Oberflächen durch mehrfach gekrümmte Ebenen gebildet sind.

Das Werkzeug 2 weist eine Rotationsachse 12 auf, die durch einen zentrischen Bereich des Werkzeugs verläuft. Um die Rotationsachse 12 des Werkzeugs 2 ist eine Werkzeugaufnahme 14 ausgebildet, mit der das Werkzeug 2 an der Halterung einer Werkzeugmaschine befestigt werden kann.

Benachbart und radial innenliegend zu den Spankammern 10 sind Materialausnehmungen 16 vorgesehen. Diese weisen ebenfalls mehrfach gekrümmte Oberflächen auf und sind jeweils blütenblattartig ausgebildet. Dies lässt sich auch aus Figur 2 entnehmen. Jede der vier Materialausnehmungen 16 ist jeweils symmetrisch zu einer radial verlaufenden Symmetrieachse 18 ausgebildet.

Dabei erstreckt sich eine Materialausnehmung sowohl in durch radiale Achsen 18 als auch durch die Rotationsachse 12 vorgegebenen Richtungen. Somit ist die Materialausnehmung 16 insgesamt schräg zur Stirnseite 4 beziehungsweise zur Rotationsachse 12 geneigt und besonders gut greifbar.

Der durch jede Materialausnehmung gebildete Querschnitt 16 verjüngt sich von der Werkzeugaufnahme 14 her kommend in Richtung auf eine zugeordnete Spankammer 10. Zwischen jeder Materialausnehmung 16 und einer zugeordneten Spankammer 10 ist eine rinnenförmige Engstelle 20 vorgesehen. Über die Engstelle 20 können Späne, die zwischen das Werkzeug 2 und ein zu bearbeitendes Werkstück geraten, effektiv weggeschleudert werden. Außerdem kann gegebenenfalls ein werkzeugmittig zugeführtes Bearbeitungsmedium entlang der Material ausnehmung 16 durch die Engstelle 20 hindurch einer Spankammer 10 und somit einem Schneidelement 8 zugeführt werden. Dabei kann die Oberfläche der Materialausnehmung so geformt sein, dass sie als Leit- oder Strömungsfläche fungiert und ein Bearbeitungsmedium bei Rotation des Werkzeugs 2 in den Bereich des der Spankammer 10 zugeordneten Schneidelements 8 geschleudert werden kann.

Jede Engstelle 20 ist beidseitig begrenzt durch eine Dichtstelle 22, die bei Eingriff des Werkzeugs 2 in einen zu bearbeitenden Werkstoff einen kleinen Abstand zur Werkstückoberfläche hat. Zwischen der Werkstückoberfläche und den Dichtstellen 22 kann dann mit Hilfe des Bearbeitungsmediums ein Dichtfilm gebildet werden, so dass zumindest ein größter Teil des Bearbeitungsmediums über die Materialausnehmungen 16 und die Engstelle 20 einer Spankammer 10 zugeführt werden kann.

Zusätzlich oder ausschließlich kann jedem Schneidelement 8 mit Hilfe von umfangsseitig geschlossenen Kanälen ein Bearbeitungsmedium zugeführt werden. In Figur 1 ist der Ausgang 24 eines solchen Kanals sichtbar. Der Eingang dieses Kanals befindet sich an der Innenseite 26 der Werkzeugaufnahme 14.

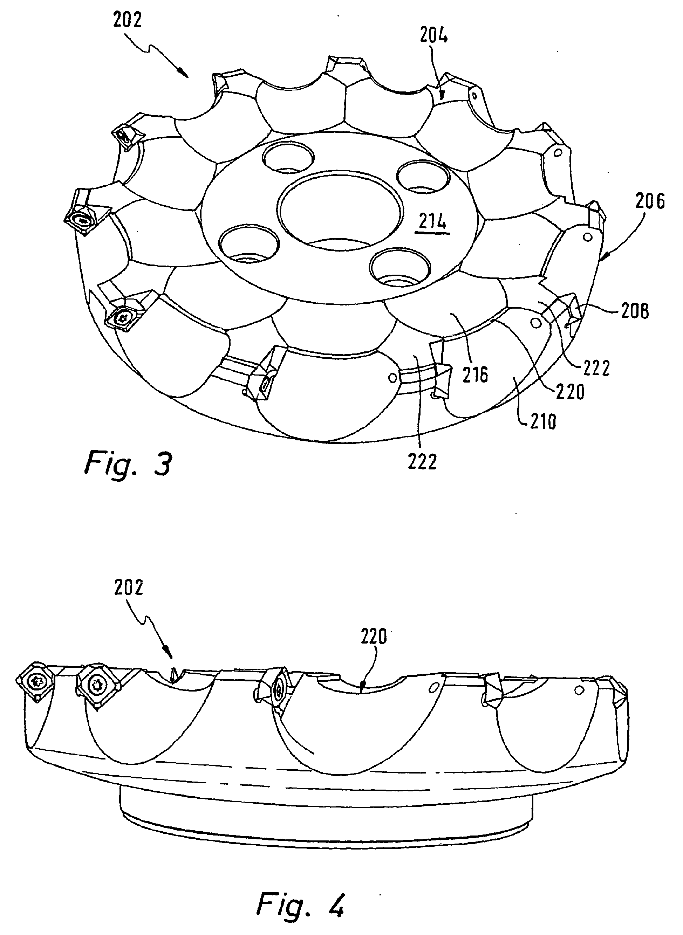

In den Figuren 3 und 4 ist eine zweite Ausführungsform eines erfindungsgemäßen Werkzeugs dargestellt. Das Werkzeug ist insgesamt mit dem Bezugszeichen 202 bezeichnet und weist insgesamt elf am Umfang 206 und benachbart zur Stirnseite 204 angeordnete Schneidelemente 208 auf. Die Schneidelemente 208 sind jeweils benachbart zu Spankammern 210 angeordnet. An jede Spankammer 210 ist, radial hierzu innenliegend und an eine Werkzeugaufnahme 214 angrenzend, eine Materialausnehmung 216 vorgesehen. Jede Materialausnehmung 216 ist blütenblattartig ausgebildet und bietet somit guten Halt für die Fingerkuppen der Hand einer Person, die das Werkzeug 202 handhaben soll. Zwischen jeder Materialausnehmung 216 und einer benachbarten Spankammer 210 ist eine rinnenförmige Engstelle 220 vorgesehen. Die Engstelle 220 ist jeweils beidseitig begrenzt durch Flächen 222, die ihrerseits begrenzt sind durch Berandungen der Materialausnehmungen 216 beziehungsweise der Spankammern 210.

Aus Figur 4 ist besonders gut der rinnenförmige Querschnitt einer Engstelle 220 ersichtlich.

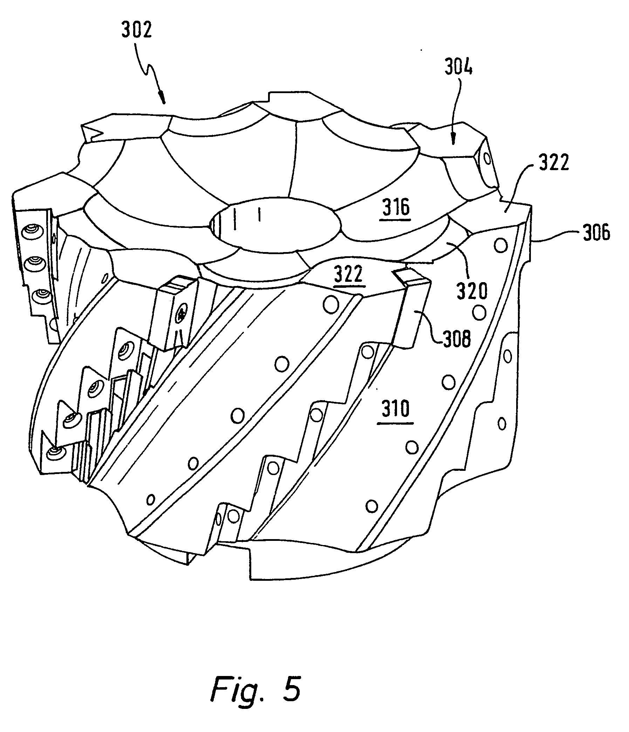

Das in Figur 5 allgemein mit dem Bezugszeichen 302 bezeichnete Werkzeug weist insgesamt sieben Sätze von jeweils fünf Schneidelementen 308 auf, die sich von einer Stirnseite 304 jeweils entlang des Umfangs 306 und benachbart zu einer zugeordneten Spankammer 310 erstrecken. Jeder Spankammer 310 ist radial innenliegend eine Materialausnehmung 316 zugeordnet. Zwischen jedem Paar von Materialausnehmung 316 und Spankammer 310 ist eine rinnenförmige Engstelle 320 vorgesehen, die jeweils beidseitig durch Dichtstellen 322 begrenzt ist.

## Patentansprüche

1. Werkzeug (2, 202, 302) zur rotierenden spanabhebenden Bearbeitung von Werkstoffen, mit einer senkrecht zur Rotationsachse (12) angeordneten Stirnseite (4, 204, 304), an und/oder in deren Umfang (6, 206, 306) mindestens ein Schneidelement (8, 208, 308) angeordnet ist, wobei das Schneidelement (8, 208, 308) benachbart zu oder in einer Spankammer (10, 210, 310) angeordnet ist, wobei an der Stirnseite (4, 204, 304) des Werkzeugs (2, 202, 302), zu einer Spankammer (10, 210, 310) radial innen liegend, mindestens eine zur Rotationsachse (12) nichtkonzentrische und eine geschlossene Oberfläche aufweisende Materialausnehmung (16, 216, 316) vorgesehen ist,
**dadurch gekennzeichnet, dass** die Materialausnehmung durch eine mehrfach gekrümmte Ebene gebildete und blütenblattartig ausgebildet ist.

2. Werkzeug (2, 202, 302) nach Anspruch 1, **dadurch gekennzeichnet, dass** die Materialausnehmung (16, 216, 316) zwischen einer Spankammer (10, 210, 310) und einem zentrischen Bereich des Werkzeugs (2, 202, 302) angeordnet ist.

3. Werkzeug (2, 202, 302) nach Anspruch 2, **dadurch gekennzeichnet, dass** der zentrischen Bereich, insbesondere zur Bildung einer Werkzeugaufnahme (14, 214), eine um die Rotationsachse angeordnete zylindrische Senkung und/oder Öffnung aufweist.

4. Werkzeug (2, 202, 302) nach einem der vorhergehenden Ansprüche, **dadurch gekennzeichnet, dass** die Materialausnehmungen punktsymmetrisch zur Rotationsachse (12) des Werkzeugs (2) angeordnet sind.

5. Werkzeug (2, 202, 302) nach einem der vorhergehenden Ansprüche, **dadurch gekennzeichnet, dass** die Anzahl der Materialausnehmungen (16, 216, 316) der Anzahl der Spankammern (10, 210, 310) entspricht.

6. Werkzeug (2, 202, 302) nach einem der vorhergehenden Ansprüche, **dadurch gekennzeichnet, dass** die Materialausnehmungen (16, 216, 316) benachbart zu den Spankammern (10, 210, 310) angeordnet sind.

7. Werkzeug (2, 202, 302) nach einem der vorhergehenden Ansprüche, **dadurch gekennzeichnet, dass** die Materialausnehmungen (16, 216, 316) direkt an die Spankammern (10, 210, 310) angrenzen.

8. Werkzeug (2, 202, 302) nach einem der vorhergehenden Ansprüche, **dadurch gekennzeichnet, dass** an der Stirnseite (4, 204, 304) zwischen Materialausnehmung (16, 216, 316) und Spankammer (10, 210, 310) eine Engstelle (20, 220, 320) vorgesehen ist.

9. Werkzeug (2, 202, 302) nach einem der vorhergehenden Ansprüche, **dadurch gekennzeichnet, dass** die Materialausnehmung (16) symmetrisch zu einer in radialer Richtung des Werkzeugs (2, 202, 302) verlaufenden Achse (18) ausgebildet ist.

10. Werkzeug (2, 202, 302) nach einem der vorhergehenden Ansprüche, **dadurch gekennzeichnet, dass** sich die Oberfläche einer Materialausnehmung (16, 216, 316) bezogen auf das Werkzeug in radialer und axialer Richtung erstreckt.

11. Werkzeug (2, 202, 302) nach einem der vorhergehenden Ansprüche, **dadurch gekennzeichnet, dass** die Materialausnehmung (16, 216, 316) einen senkrecht zur Rotationsachse (12) verlaufenden Querschnitt begrenzt, der sich nach radial außen verjüngt.

12. Werkzeug (2, 202, 302) nach einem der vorhergehenden Ansprüche, **dadurch gekennzeichnet, dass** die Spankammer (10, 210, 310) einen senkrecht zur Rotationsachse (12) verlaufenden Querschnitt begrenzt, der sich nach radial außen erweitert.

13. Werkzeug (2, 202, 302) nach einem der vorhergehenden Ansprüche, **dadurch gekennzeichnet, dass** zum Transport von Bearbeitungsmedium mindestens ein zumindest teilweise radial verlaufender, in Umfangsrichtung geschlossener Kanal vorgesehen ist.

14. Werkzeug (2, 202, 302) nach Anspruch 13, **dadurch gekennzeichnet, dass** der Eingang des Kanals in einem werkzeugmittigen Bereich vorgesehen ist.

15. Werkzeug (2, 202, 302) nach Anspruch 13 oder 14, **dadurch gekennzeichnet, dass** der Eingang des Kanals innerhalb einer Materialausnehmung (16, 216, 316) vorgesehen ist.

16. Werkzeug (2, 202, 302) nach Anspruch 15, **dadurch gekennzeichnet, dass** der Ausgang (24) des Kanals in einer Spankammer (10) vorgesehen ist.

17. Werkzeug (2, 202, 302) nach einem der vorhergehenden Ansprüche, **dadurch gekennzeichnet, dass** an der Stirnseite (4, 204, 304) zwischen Materialausnehmung (16, 216, 316) und Spankammer (10, 210, 310) eine Engstelle (20, 220, 320) vorgesehen ist, wobei ein Bearbeitungsmedium von der Materialausnehmung (16, 216, 316) über die Engstelle (20, 220, 320) der Spankammer (10, 210, 310) zuführbar ist.

18. Werkzeug (2, 202, 302) nach Anspruch 17, **dadurch gekennzeichnet, dass** die Engstelle (20, 220, 320) durch Verschneidung einer Materialausnehmung (16, 216, 316) mit einer Spankammer (10, 210, 310) gebildet ist.

19. Werkzeug (2, 202, 302) nach Anspruch 17 oder 18, **dadurch gekennzeichnet, dass** die Engstelle (20, 220, 320) rinnenförmig ausgebildet ist.

20. Werkzeug (2, 202, 302) nach einem der Ansprüche 17 bis 19, **dadurch gekennzeichnet, dass** die Engstelle (20, 220, 320) von Dichtstellen (22, 222, 322) begrenzt ist.

21. Werkzeug (2, 202, 302) nach Anspruch 20, **dadurch gekennzeichnet, dass** die Dichtstellen (22, 222, 322) zumindest teilweise durch Berandungen der Materialausnehmungen (16, 216, 316) und der Spankammern (10, 210, 310) begrenzt sind.

22. Werkzeug (2, 202, 302) nach Anspruch 20 oder 21, **dadurch gekennzeichnet, dass** eine Dichtstelle (22, 222, 322) zwischen einer ersten Spankammer (10, 210, 310) und einer radial hierzu innen liegenden ersten Materialausnehmung (16, 216, 316) und einer zweiten Spankammer (10, 210, 310) und einer radial hierzu innen liegenden zweiten Materialausnehmung (16, 216, 316) angeordnet ist.

23. Werkzeug (2, 202, 302) nach einem der Ansprüche 20 bis 22, **dadurch gekennzeichnet, dass** die Dichtstellen (22, 222, 322) bei Eingriff des Schneidelements (8, 208, 308) in den zu bearbeitenden Werkstoff einen kleinen Abstand zur Werkstückoberfläche haben.

24. Werkzeug (2, 202, 302) nach Anspruch 23, **dadurch gekennzeichnet, dass** der Abstand 0.01 bis 1.5 mm, insbesondere 0.2 bis 0.5 mm beträgt.

## Claims

1. A tool (2, 202, 302) for machining materials in a rotating, cutting manner, having a front side (4, 204, 304) arranged perpendicularly in respect to the axis of rotation (12), on and/or in which at least one cutting element (8, 208, 308) is arranged, wherein the cutting element (8, 208, 308) is arranged adjacent to or inside a chip chamber (10, 210, 310), wherein at least one cutout (16, 216, 316) in the material is provided at the front side (4, 204, 304) of the tool (2, 202, 302), is located radially inward in respect to a chip chamber (10, 210, 310), is not concentric in respect to the axis of rotation (12), and has a closed surface, **characterized in that** the cutout (16, 216, 316) in the material is formed by a plane which is multiply curved and designed in the manner of a flower petal.

2. The tool (2, 202, 302) in accordance with claim 1, **characterized in that** the cutout (16, 216, 316) in the material is arranged between a chip chamber (10, 210, 310) and a center area of the tool (2, 202, 302).

3. The tool (2, 202, 302) in accordance with claim 2, **characterized in that** the center area has a cylindrical depression and/or opening arranged around the axis of rotation, in particular for forming a tool receiver (14, 214).

4. The tool (2, 202, 302) in accordance with one of the preceding claims, **characterized in that** the cutouts in the material are arranged point-symmetrically in respect to the axis of rotation (12) of the tool (2).

5. The tool (2, 202, 302) in accordance with one of the preceding claims, **characterized in that** the number of the cutouts (16, 216, 316) in the material corresponds to the number of the chip chambers (10, 210, 310).

6. The tool (2, 202, 302) in accordance with one of the preceding claims, **characterized in that** the cutouts (16, 216, 316) in the material are arranged adjacent to the chip chambers (10, 210, 310).

7. The tool (2, 202, 302) in accordance with one of the preceding claims, **characterized in that** the cutouts (16, 216, 316) in the material directly border on the chip chambers (10, 210, 310).

8. The tool (2, 202, 302) in accordance with one of the preceding claims, **characterized in that** a narrow place (20, 220, 320) is provided at the front side (4, 204, 304) between the cutout (16, 216, 316) in the material and the chip chamber (10, 210, 310).

9. The tool (2, 202, 302) in accordance with one of the preceding claims, **characterized in that** the cutout (16, 216, 316) in the material is embodied symmetrically in respect to an axis (18) extending in the radial direction of the tool (2, 202, 302).

10. The tool (2, 202, 302) in accordance with one of the preceding claims, **characterized in that**, in respect to the tool, the surface of a cutout (16, 216, 316) in the material extends in the radial and axial directions.

11. The tool (2, 202, 302) in accordance with one of the preceding claims, **characterized in that** the cutout (16, 216, 316) in the material delimits a cross section, which extends perpendicularly in respect to the axis of rotation (12) and tapers radially outward.

12. The tool (2, 202, 302) in accordance with one of the preceding claims, **characterized in that** the chip chamber (10, 210, 310) delimits a cross section, which extends perpendicularly in respect to the axis of rotation (12) and tapers radially outward.

13. The tool (2, 202, 302) in accordance with one of the preceding claims, **characterized in that** a conduit, which extends at least partially radially and is closed in the circumferential direction, is provided for transporting a processing medium.

14. The tool (2, 202, 302) in accordance with claim 13, **characterized in that** the entry to the conduit is provided in an area centered in the tool.

15. The tool (2, 202, 302) in accordance with claim 13 or 14, **characterized in that** the entry to the conduit is provided within a cutout (16, 216, 316) in the material.

16. The tool (2, 202, 302) in accordance with claim 15, **characterized in that** the outlet (24) from the conduit is provided in a chip chamber (10).

17. The tool (2, 202, 302) in accordance with one of the preceding claims, **characterized in that** a narrow place (20, 220, 320) is provided at the front side (4, 204, 304) between the cutout (16, 216, 316) in the material and the chip chamber (10, 210, 310), wherein a processing medium can be fed in from the cutout (16, 216, 316) in the material via the narrow place (20, 220, 320) to the chip chamber (10, 210, 310).

18. The tool (2, 202, 302) in accordance with claim 17, **characterized in that** the narrow place (20, 220, 320) is formed by intersecting a cutout (16, 216, 316) in the material with a chip chamber (10, 210, 310).

19. The tool (2, 202, 302) in accordance with claim 17 or 18, **characterized in that** the narrow place (20, 220, 320) is designed to be groove-shaped.

20. The tool (2, 202, 302) in accordance with one of claims 17 to 19, **characterized in that** the narrow place (20, 220, 320) is delimited by sealing points (22, 222, 322).

21. The tool (2, 202, 302) in accordance with claim 20, **characterized in that** the sealing points (22, 222, 322) are at least partially delimited by borders of the cutouts (16, 216, 316) and of the chip chambers (10, 210, 310).

22. The tool (2, 202, 302) in accordance with claim 20 or 21, **characterized in that** a sealing point (22, 222, 322) is arranged between a first chip chamber (10, 210, 310) and a first cutout (16, 216, 316), which is located radially inward in relation to it, and a second chip chamber (10, 210, 310) and a second cutout (16, 216, 316), which is located radially inward in relation to it.

23. The tool (2, 202, 302) in accordance with one of claims 20 to 22, **characterized in that** in the course of the engagement of the cutting element (8, 208, 308) with the material to be processed, the sealing points (22, 222, 322) are at a small distance from the surface of the material.

24. The tool (2, 202, 302) in accordance with claim 23, **characterized in that** the distance is 0.01 to 1.5 mm, in particular 0.2 to 0.5 mm.

## Revendications

1. Outil (2, 202, 302) permettant l'usinage rotatif par enlèvement de copeaux de matériaux, comportant une face frontale (4, 204, 304) disposée perpendiculairement par rapport à l'axe de rotation (12), au niveau de laquelle et/ou sur la circonférence (6, 206, 306) de laquelle est disposé au moins un élément coupant (8, 208, 308), moyennant quoi l'élément coupant (8, 208, 308) est disposé près de ou dans un logement de copeaux (10, 210, 310), moyennant quoi, sur la face frontale (4, 204, 304) de l'outil (2, 202, 302), radialement vers l'intérieur par rapport à un logement de copeaux (10, 210, 310), est prévu au moins un évidement de matériau (16, 216, 316) présentant une surface fermée et une surface non concentrique par rapport à l'axe de rotation (12), **caractérisé en ce que** l'évidement de matériau (16, 216, 316) est formé par un plan incurvé plusieurs fois et configuré sous la forme de pétale.

2. Outil (2, 202, 302) selon la revendication 1, **caractérisé en ce que** l'évidement de matériau (16, 216, 316) est disposé entre un logement de copeaux (10, 210, 310) et une zone centralisée de l'outil (2, 202, 302).

3. Outil (2, 202, 302) selon la revendication 2, **caractérisé en ce que** la zone centralisée, en particulier destinée à la formation d'un logement d'outil (14, 214), présente un creux et/ou une ouverture cylindrique disposé(e) autour de l'axe de rotation.

4. Outil (2, 202, 302) selon l'une quelconque des revendications précédentes, **caractérisé en ce que** les évidements de matériau sont situés de manière ponctuellement symétrique par rapport à l'axe de rotation (12) de l'outil (2).

5. Outil (2, 202, 302) selon l'une quelconque des revendications précédentes, **caractérisé en ce que** le nombre d'évidements de matériau (16, 216, 316) correspond au nombre de logements de copeaux (10, 210, 310).

6. Outil (2, 202, 302) selon l'une quelconque des revendications précédentes, **caractérisé en ce que** les évidements de matériau (16, 216, 316) sont disposés à côté des logements de copeaux (10, 210, 310).

7. Outil (2, 202, 302) selon l'une quelconque des revendications précédentes, **caractérisé en ce que** les évidements de matériau (16, 216, 316) sont directement adjacents aux logements de copeaux (10, 210, 310).

8. Outil (2, 202, 302) selon l'une quelconque des revendications précédentes, **caractérisé en ce que**, au niveau de la face frontale (4, 204, 304) entre l'évidement de matériau (16, 216, 316) et le logement de copeaux (10, 210, 310), est prévu un rétrécissement (20, 220, 320).

9. Outil (2, 202, 302) selon l'une quelconque des revendications précédentes, **caractérisé en ce que** l'évidement de matériau (16) est configuré de manière symétrique par rapport à un axe (18) s'étendant dans la direction radiale de l'outil (2, 202, 302).

10. Outil (2, 202, 302) selon l'une quelconque des revendications précédentes, **caractérisé en ce que** la surface d'un évidement de matériau (16, 216, 316) s'étend dans la direction radiale et axiale par rapport à l'outil.

11. Outil (2, 202, 302) selon l'une quelconque des revendications précédentes, **caractérisé en ce que** l'évidement de matériau (16, 216, 316) délimite une section transversale s'étendant perpendiculairement par rapport à l'axe de rotation (12), laquelle section se rétrécit radialement vers l'extérieur.

12. Outil (2, 202, 302) selon l'une quelconque des revendications précédentes, **caractérisé en ce que** le logement de copeaux (10, 210, 310) délimite une section transversale s'étendant perpendiculairement par rapport à l'axe de rotation (12), laquelle s'élargit radialement vers l'extérieur.

13. Outil (2, 202, 302) selon l'une quelconque des revendications précédentes, **caractérisé en ce que**, pour véhiculer le milieu d'usinage, on prévoit au moins un canal s'étendant au moins en partie radialement, fermé dans la direction circonférentielle.

14. Outil (2, 202, 302) selon la revendication 13, **caractérisé en ce que** l'entrée du canal est prévue dans une zone centrale de l'outil.

15. Outil (2, 202, 302) selon la revendication 13 ou 14, **caractérisé en ce que** l'entrée du canal est prévue à l'intérieur d'un évidement de matériau (16, 216, 316).

16. Outil (2, 202, 302) selon la revendication 15, **caractérisé en ce que** la sortie (24) du canal est prévue dans un logement de copeaux (10).

17. Outil (2, 202, 302) selon l'une quelconque des revendications précédentes, **caractérisé en ce que**, sur la face frontale (4, 204, 304) entre l'évidement de matériau (16, 216, 316) et le logement de copeaux (10, 210, 310) est prévu un rétrécissement (20, 220, 320), moyennant quoi un milieu d'usinage peut être véhiculé à partir de l'évidement de matériau (16, 216, 316) en passant par le rétrécissement (20, 220, 320) pour rejoindre le logement de copeaux (10, 210, 310).

18. Outil (2, 202, 302) selon la revendication 17, **caractérisé en ce que** le rétrécissement (20, 220, 320) est formé par l'intersection entre un évidement de matériau (16, 216, 316) et un logement de copeaux (10, 210, 310).

19. Outil (2, 202, 302) selon la revendication 17 ou 18, **caractérisé en ce que** le rétrécissement (20, 220, 320) est configuré de manière annulaire.

20. Outil (2, 202, 302) selon l'une quelconque des revendications 17 à 19, **caractérisé en ce que** le rétrécissement (20, 220, 320) est délimité par des zones d'étanchéité (22, 222, 322).

21. Outil (2, 202, 302) selon la revendication 20, **caractérisé en ce que** les zones d'étanchéité (22, 222, 322) sont délimitées au moins en partie par les bords des évidements de matériau (16, 216, 316) et du logement de copeaux (10, 210, 310).

22. Outil (2, 202, 302) selon la revendication 20 ou 21, **caractérisé en ce qu'**une zone d'étanchéité (22, 222, 322) est disposée entre un premier logement de copeaux (10, 210, 310) et un premier évidement de matériau (16, 216, 316) disposé radialement vers l'intérieur par rapport à celle-ci, et entre un deuxième logement de copeaux (10, 210, 310) et un deuxième évidement de matériau (16, 216, 316) disposé radialement vers l'intérieur par rapport à celle-ci.

23. Outil (2, 202, 302) selon l'une quelconque des revendications 20 à 22, **caractérisé en ce que** les zones d'étanchéité (22, 222, 322), lors de la mise en prise de l'élément coupant (8, 208, 308) dans le matériau à usiner, se trouvent à une petite distance de la surface de la pièce.

24. Outil (2, 202, 302) selon la revendication 23, **caractérisé en ce que** la distance est comprise entre 0,01 et 1,5 mm, en particulier entre 0,2 et 0,5 mm.
